# EUROPEAN PATENT APPLICATION

(11) **EP 2 218 573 A1**
(43) Date of publication of application: **18.08.2010**
(21) Application number: 10153016.0
(22) Date of filing: 09.02.2010
(51) Int. Cl.: B29C 73/16

(54) **Unit for repairing and inflating inflatable articles**

(30) Priority: 11.02.2009 IT TO20090095
(71) Applicant: TEK GLOBAL S.r.l., 61100 Pesaro (IT)
(72) Inventor: Lolli, Sergio, 61100 Pesaro (IT)
(74) Representative: Jorio, Paolo

(57) **Abstract**

A unit for repairing and inflating an inflatable article defines a volume (13) for a sealing fluid; a compressed-air inlet (9) connectable to a pressure source; an outlet (37) connected fluidically to the inlet (9) by the volume (13) to inject sealing fluid into the inflatable article by means of compressed air; and a pressure regulating unit (29) having an outlet node (33) upstream from the volume (13), a first air resistance (31) for reducing air pressure to the volume (13), a bypass line (43) connected to the outlet node (33) and parallel to the first air resistance (31), and a selector (30) connected to the first air resistance (31) and the bypass line (43).

## Description

### TECHNICAL FIELD

The present invention relates to a unit for repairing and inflating inflatable articles, such as a punctured vehicle tyre.

### BACKGROUND ART

A punctured tyre can be replaced with a spare wheel stowed in a compartment on the vehicle, e.g. under the floor of the boot, in the case of a car.

The spare wheel, however, is bulky, and takes up space in the boot, which could be put to better use.

The spare wheel is also heavy, which makes changing the wheel difficult, especially in the case of a large spare wheel of a heavy-duty vehicle.

Repair and inflation kits are also used, to enable punctures to be repaired without removing the wheel.

Known kits comprise a sealing fluid canister; and a dedicated compressor connected to the canister. In the event of a puncture, the canister is connected by a hose to the tyre, and the dedicated compressor is turned on.

The compressed air injects the sealing fluid into the tyre, and inflates the tyre once the fluid increases in viscosity and seals the puncture.

Known kits normally feature a reciprocating dedicated compressor powered by an electric motor. Compressors of this sort are relatively noisy and bulky, especially those designed to inflate large, heavy-duty vehicle tyres.

Some, e.g. heavy-duty, vehicles are equipped with their own on-board air circuit, the air pressure of which, however, may not be suitable for injecting the sealing fluid, and may cause malfunctioning. More specifically, an on-board, heavy-duty vehicle air circuit comprises accumulators to maintain constant pressure and cater to sudden demand by actuating devices. When a repair unit, however, is connected to the air circuit, the high pressure causes hammering and surging, which damage the unit; the small orifices of the valve closing the sealing fluid canister may cause clogging; and high pressure also causes premature polymerization of the sealing fluid, which may result in partial or complete clogging of the feed lines.

On the other hand, the high pressure of on-vehicle air circuits enables faster inflation of the tyre and, therefore, shorter hold-ups to carry out the repair.

### OBJECT OF THE INVENTION

It is an object of the present invention to provide a unit for repairing and inflating inflatable articles, designed to eliminate the above drawbacks.

According to the present invention, there is provided a unit for repairing and inflating inflatable articles, the unit defining a volume for containing a sealing fluid; an inlet and outlet connected fluidically to each other by the volume; and releasable fluidic connecting means for connecting the inlet to an outlet port of a vehicle air circuit comprising a pressure source and at least one actuator.

The repair and inflation unit also comprises a valve assembly located in series with the sealing fluid canister and designed to regulate the air input pressure to the canister. More specifically, the valve assembly is designed to operate selectively in a first operating configuration, in which the input pressure is reduced to a suitable injection value; and a second operating configuration, in which the input pressure to the canister is higher than in the first operating configuration of the valve assembly.

In other words, the input pressure to the sealing fluid canister is regulated, i.e. reduced, to achieve correct outflow of the sealing fluid from the canister to the tyre; and high pressure can be restored for faster inflation.

Moreover, the repair and inflation unit has no dedicated compressor, pressure being generated by a compressor already on the vehicle and mainly designed to control part of the vehicle, e.g. the brakes.

### BRIEF DESCRIPTION OF THE DRAWINGS

A preferred, non-limiting embodiment of the present invention will be described by way of example with reference to the accompanying drawings, in which:
Figure 1 shows a view in perspective of one embodiment of the present invention;
Figure 2 shows a fluidic diagram of the Figure 1 repair and inflation unit.

### PREFERRED EMBODIMENT OF THE INVENTION

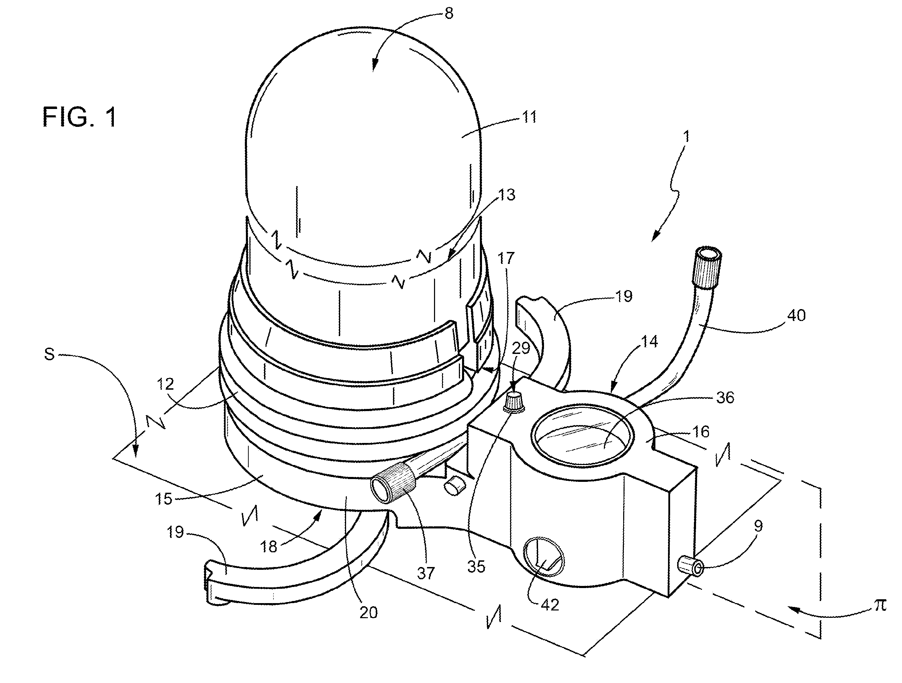

Number 1 in Figure 1 indicates as a whole a tyre repair and inflation unit connectable to a vehicle air circuit comprising a compressed-air generator connected rigidly to a fixed structure of the vehicle. e.g. the frame; an actuator, e.g. a vehicle brake actuator; and an outlet port to which to connect unit 1.

Unit 1 comprises a sealing fluid canister 8 connected to an inlet 9 for compressed air from the air circuit of a pressure source, such as the vehicle air circuit.

More specifically, canister 8 comprises a bottle 11; a dispenser unit (not shown) connecting inlet 9 to bottle 11; and a hose 12 connecting bottle 11 to a tyre. Bottle 11, the dispenser unit, and hose 12 preferably define a single, replaceable unit, i.e. which is replaced when the bottle is empty or the sealing fluid is past its use-by date.

Canister 8 preferably comprises an internal valve (not shown) connecting inlet 9 fluidically to hose 12 via an inner volume 13 of bottle 11, and may be made as described in International Patent Application WO-A1-2005084968 filed by the Applicant.

Unit 1 also comprises a pedestal 14 connected to canister 8 by releasable connecting means, e.g. a threaded connection or fast-fit coupling, and defining inlet 9.

More specifically, the releasable connecting means are such that, when repairing and inflating the tyre, canister 8 is set to a substantially, though not necessarily, vertical operating position, in which hose 12, connected to the dispenser unit of canister 8, faces downwards and is interposed between bottle 11 and a supporting surface S on which pedestal 14 rests (Figure 1).

Pedestal 14 comprises a supporting body 15, to which canister 8 is fitted; and a secondary body 16 connected rigidly to supporting body 15 and defining with it an annular recess 17.

Pedestal 14 is substantially symmetrical with respect to a plane n (only shown partly in Figure 1), and secondary body 16 is smaller than the supporting body in a direction perpendicular to plane n.

Pedestal 14 - preferably supporting body 15 - defines two seats 18 adjacent to supporting surface S, and, in this non-limiting embodiment of the present invention, comprises two extractable arms 19 which withdraw inside seats 18. Arms 19 are preferably symmetrical with respect to plane Π, and define respective supports for pedestal 14 in a direction perpendicular to plane n.

Supporting body 15 is cylindrical, and defines annular recess 17 to house hose 12 connected to the dispenser unit of canister 8. Accordingly, arms 19 are arc-shaped and hinged to respective peripheral portions 20 of supporting body 15, so they are concentric with supporting body 15 when withdrawn.

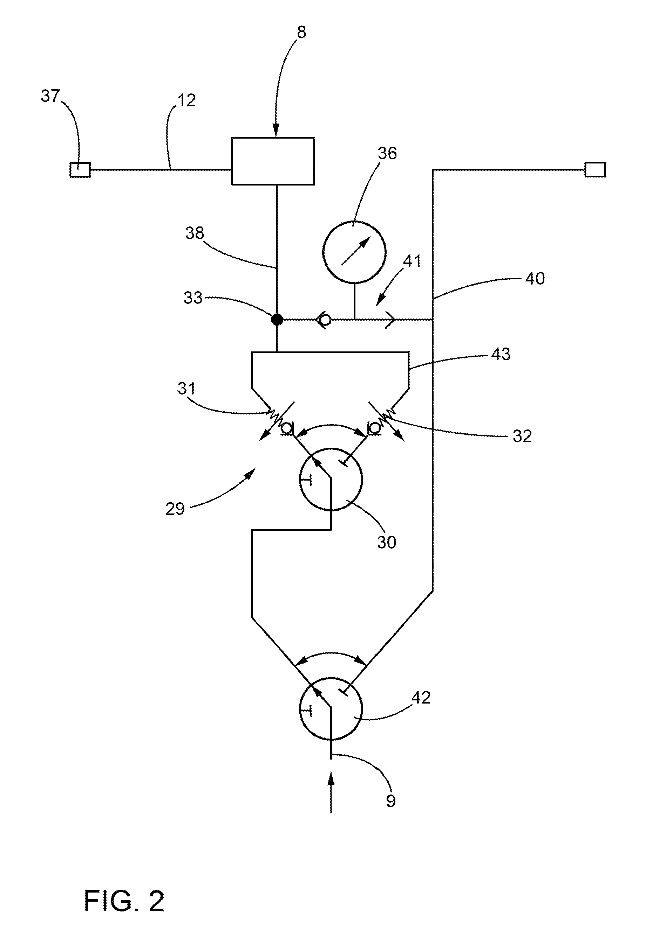

Unit 1 also comprises a pressure regulating unit 29 mounted upstream from volume 13 to adjust the air pressure to bottle 11 to the best sealing fluid injection pressure. More specifically, the pressure regulating unit (Figure 2) comprises a selector valve 30; and a first and second regulating valve 31, 32 connected, parallel to each other, to selector valve 30, and the respective outlets of which join up at a node 33 series connected to canister 8.

Pressure regulating unit 29 is located in series between inlet 9 and canister 8, and adjusts pressure discretely to achieve the best sealing fluid injection pressure, and the best tyre inflation pressure, as described in detail below.

More specifically, regulating valve 31 is an air resistance that produces a pressure drop to reduce the pressure of node 33 and canister 8 to a suitable pressure to inject the sealing fluid from bottle 11.

Regulating valve 32 is a second air resistance which, between its inlet and outlet, produces a smaller pressure drop than regulating valve 31, so that, when selector valve 30 directs compressed airflow to regulating valve 32 and closes off access to regulating valve 31 (the opposite configuration to the one shown in Figure 2), the airflow pressure at canister 8 is higher than when selector valve 30 directs airflow to regulating valve 31 and closes regulating valve 32 (Figure 2 configuration).

In a preferred embodiment, each regulating valve 31, 32 is a non-return valve comprising a shutter, and a spring pressing the shutter into the closed position. To operate as described above, the spring of regulating valve 31 has a greater modulus than the spring of regulating valve 32.

In another preferred embodiment of the present invention, the modulus of the springs of regulating valves 31, 32 can be user-adjusted, preferably manually.

Unit 1 also comprises a display device for showing the user when injection is completed, i.e. when the sealing fluid in bottle 11 runs out, and inflation can begin. In a preferred embodiment of the present invention, the display device is passive, and comprises a tube, the wall of which has at least one portion made of transparent or semitransparent material, so the user can see whether or not there is sealing fluid flowing along the tube. The tube defines hose 12, and, during use, the display device enables the user to check continued flow of sealing fluid along hose 12. When the display device shows no flow of sealing fluid along hose 12, the user may switch selector valve 30 to direct compressed airflow to regulating valve 32. Selector valve 30 preferably comprises a knob 35, and has a rotary shutter connected to knob 35, which the user turns to switch the selector valve.

To check tyre pressure during inflation, unit 1 comprises a gauge 36 located between inlet 9 and a ring nut 37 connected to hose 12 and which screws onto the safety valve of the tyre. Gauge 36 preferably picks up the pressure signal along a line 38 connecting node 33 to canister 8.

Unit 1 comprises a second hose 40 parallel to canister 8 and connected to inlet 9. Hose 40 receives compressed air directly from inlet 9, and serves solely to inflate the tyre when checking tyre pressure. Accordingly, hose 40 is also connected to a gauge; and gauge 36 is preferably connected to both line 38 and hose 40 by an OR fluidic selector 41.

Unit 1 also comprises a second selector valve 42 for selecting a repair path, in which inlet 9 is connected to canister 8, or an inflation-only path, in which inlet 9 is connected to hose 40.

Unit 1 also comprises a pressure reducer between inlet 9 and hose 40, so pressure can also be reduced when checking tyre pressure, as opposed to repairing the tyre.

For example, the pressure reducer is a continuously-adjusted valve defining a variable air resistance along hose 40 by constriction. Starting with the valve in the closed position, the user can increase tyre pressure by gradually relieving the constriction. A spring may also be provided to restore the pressure reducer to the closed position when pressure is no longer being regulated by the user.

In a preferred embodiment, the pressure reducer is incorporated in selector valve 42, which is a continuously-adjusted valve, at least as regards opening and closing hose 40.

Clearly, changes may be made to the unit for repairing and inflating inflatable articles as described and illustrated herein without, however, departing from the scope of the present invention as defined in the accompanying Claims.

For example, regulating valve 32 may be eliminated, and regulating valve 31 is located parallel to a bypass line 43 which produces no significant pressure drop between selector valve 30 and node 33.

Two dedicated gauges may also be provided, one connected between selector valve 42 and ring nut 37, preferably between node 33 and canister 8, and the other connected to hose 40, downstream from selector valve 42.

Arms 19 may be connected differently to move between a withdrawn and extracted position, e.g. may be straight and slide along runners defined by pedestal 14.

Hose 40 and selector valve 42 may be eliminated, in which case, inlet 9 is connected to canister 8 solely by pressure regulating unit 29.

## Claims

1. A unit for repairing and inflating an inflatable article, the unit defining a volume (13) for a sealing fluid; a compressed-air inlet (9) connectable to a pressure source; an outlet (37) connected fluidically to said inlet (9) by said volume (13) to inject sealing fluid into said inflatable article by means of compressed air; and a pressure regulating unit (29) having an outlet node (33) upstream from said volume (13), and comprising a first air resistance (31) for reducing air pressure to said volume (13), a bypass line (43) connected to said outlet node (33) and parallel to said first air resistance (31), and a selector (30) connected to said first air resistance (31) and said bypass line (43).

2. A unit as claimed in Claim 1, **characterized by** comprising a second air resistance (32) along said bypass line (43).

3. A unit as claimed in Claim 2, **characterized in that** said second air resistance (32) produces a smaller pressure drop than said first air resistance (31).

4. A unit as claimed in any one of the foregoing Claims, **characterized in that** said first air resistance (31) is a valve.

5. A unit as claimed in Claim 4, **characterized in that** said valve is a non-return valve.

6. A unit as claimed in any one of the foregoing Claims, **characterized by** comprising a device (12) for showing the user when the sealing fluid in said volume (13) runs out.

7. A unit as claimed in Claim 6, **characterized in that** said device (12) is a passive display device.

8. A unit as claimed in Claim 7, **characterized in that** said device (12) comprises a tube connected fluidically downstream from said volume (13), and comprising at least one portion made of material through which sealing fluid flow is visible.

9. A unit as claimed in any one of the foregoing Claims, **characterized by** comprising a second selector (42); and a hose (40) parallel to said volume (13) and said pressure regulating unit (29), and connected to said second selector (42).

10. A unit as claimed in Claim 9, **characterized by** comprising a third air resistance (42) for regulating pressure along said hose (40).
